# EUROPÄISCHE PATENTANMELDUNG

(11) **EP 2 116 466 A1**
(43) Veröffentlichungstag der Anmeldung: **11.11.2009**
(21) Anmeldenummer: 08724075.0
(22) Anmeldetag: 05.02.2008
(51) Int. Cl.: B64B 1/22, B64B 1/36, A62C 29/00

(54) **NOTFALL- UND RETTUNGSFLUGZEUG**

(30) Priorität: 05.02.2007 RU 2007104241
(71) Anmelder: Khakimov, Boris Vasileevich, Moscow 121609 (RU); Chernikov, Alexandr Nikolaevich, Moscow 109391 (RU); Demidov, German Victorovich, Kazan 420033 (RU); Khamitov, Rustem Zakievich, Moscow 127055 (RU)
(72) Erfinder: Khakimov, Boris Vasileevich, Moscow 121609 (RU); Chernikov, Alexandr Nikolaevich, Moscow 109391 (RU); Demidov, German Victorovich, Kazan 420033 (RU); Khamitov, Rustem Zakievich, Moscow 127055 (RU)
(74) Vertreter: Fleck, Hermann-Josef
(86) Internationale Anmeldenummer: PCT/RU2008/000068
(87) Internationale Veröffentlichungsnummer: WO 2008/097136

(57) **Zusammenfassung**

Die Erfindung betrifft ein Notflugzeug mit einem Rumpf, im Rumpf angeordneten Hüllen mit Trägergas, Tragflächen, einem Leitwerk, einer Motorenanlage, Vortriebsmitteln, einem Fahrgestell und einer Kabine im Rumpf. Ist dabei vorgesehen, dass die Vortriebsmittel innerhalb eines Toroid-Rotationskörpers angeordnet sind, der in ihrem Längsabschnitt ein aerodynamisches Profil aufweist und die von einer senkrechten Schubkraftrichtung in eine waagerechte Schubkraftrichtung umkehrbar ist und dass im Flugkörper und zwar mindestens in seinem unteren Teil ein Durchgang mit Austrittsluken und Einrichtungen zum Andocken an externe Objekte ausgebildet ist, dann sind die erforderlichen Flugleistungen sichergestellt und die für die unterschiedlichen Bergungsarbeiten erforderlichen Aktivitäten ausführbar.

## Beschreibung

Die Erfindung betrifft ein Notflugzeug mit einem Rumpf, im Rumpf angeordneten Hüllen mit Trägergas, Tragflächen, einem Leitwerk, einer Motorenanlage, Vortriebsmitteln, einem Fahrgestell und einer Kabine im Rumpf.

Die Erfindung ist in der Flugtechnik und nämlich für die Konstruktion von Mehrfunktionskombiflugzeugen einsetzbar. Die Erfindung kann als Rettungsmittel zum Notabtransport von Leuten aus Hochbauten, als Rettungs- und Bergungsmittel für Leute im Gebirge und auf See, als Unfallhilfe und Löschmittel, als Mittel zur Überwachung von Fernverkehrsstraßen und Geländen, als Montageausrüstung und als Personen- und Frachtflugzeug verwendet werden.

Mehrfunktionskombiflugzeuge sind weit bekannt, zum Beispiel aus folgenden Druckschriften:
- Patent der RF NR. 1808762, veröffentlicht am 15.04.93, Amtsblatt Nr. 14;
- Patent der UdSSR Nr. 1828444, KI. B 64 B 1/00, veröffentlicht am 15.07.93, Amtsblatt Nr. 26;
- Patent der RF Nr. 2009073, KI. B 64 B 1/00, veröffentlicht am 15.03.94, Amtsblatt Nr. 5;
- Patent der RF Nr. 2093414, KI. B 64 B 1/00, veröffentlicht am 20.10.97, Amtsblatt Nr. 29;
- Patent der USA Nr. 5595358 vom 21.01.1997, KI. B 64 C 27/08;
- Patent der USA Nr. 5909857 vom 08.06.1999, KI. B64C 29/00 (20060101); B60V 3/00 (20060101); B60V 3/08 (20060101); B64B 001/02. (USA-Klassifizierung 244/29; 180/127; 244/100A; 244/12.3; 244/23R);
- Europäisches Patent Nr. EP 0861773 A1 vom 07.10.1996, KI. B64B 1/12, B64B 1/68
- Patent der RF Nr. 2092381, KI. 6 B64B1/12, B60V1/16, veröffentlicht am 10.10.97. «Hybrid-Luftschiff nach A.I. Filimonov-Bauweise»

Als Prototyp wurde das Patent der RF Nr. 2092381, KI. B64B 1/12, B60V1/16, veröffentlicht am 10.10.97, «Hybrid-Luftschiff nach A.I. Filimonov-Bauweise» gewählt.

Das bekannte Hybrid-Luftschiff weist einen scheibenförmigen Flugkörper mit einem Zentraltunnel auf. Innerhalb des Flugkörpers ist ein Körper in Strömungsform eingebraut. Dieser Körper ist mit einem Drehflügel in seinem oberen Teil versehen. Der Körper ist aus Tunnelwänden mittels Radialscheidewänden mit Strömungsprofil zusammengefügt.

Es weist ferner eine Piloten- und Personenkabine und einen Laderaum, ein Triebwerk mit Druckpropellern, Landungsorgane mit Luftkissen in Form von einem aufblasbaren Globoidbehälter und Räder-Kufengleit-Gestellen auf. Die Räder-Kufengleit-Gestelle sind am Eintritt in einen Zentraltunnel eingebaut.

Ein Leitwerk mit Höhen- und Seitenleitwerk (Stabilisierungswerk) ist am Austritt aus dem Zentraltunnel installiert.

Tragflügelhälften und ein Schwanzleitwerk mit einem Stabilisator und zwei und mehr Kielflossen sind im hinteren Teil des Flugkörpers eingebaut. Strahlklappen sind an den Hinterkanten der Tragflügelhälften und des Flugkörpers angeordnet.

Gasstrahlruder sind am Stabilisator und an den Tragflügelhälften aufgebaut.

Das Hybrid-Luftschiff gemäß dem Prototyp ist zusätzlich mit Querrudern und mit einer flexiblen Abschirmung versehen. Die Querruder sind am Stabilisator angeordnet. Die flexible Abschirmung ist unten im vorderen Teil des Globoidbehälters angeordnet.

Das Hybrid-Luftschiff ist zusätzlich mit Organen zum Wasserabflug ausgerüstet. Dieses Wasserabflugwerk ist in Form einer Gleitfläche ausgeführt und unter der Piloten- und Personenkabine angeordnet. Es ist auch mit einem Hydroflügel hinter dem Flugkörper versehen. Die flexible Abschirmung ist in Form einer kegelförmigen Schürze ausgeführt. Dabei ist die Schürze der flexiblen Abschirmung aus einem dichten Grobgewebe ausgeführt.

Die genannten Flugzeuge setzen aerodynamische Elemente (Flügel, Flugkörperoberflächen), Hüllen mit Trägergas (Helium, Wasserstoff, aufgewärmte Luft) und Kraft der Triebwerkanlagen (Luftschraube) als Auftriebskraft zum Lastentransport ein.

Die technische Lösung gemäß dem Prototyp kann nicht zur Durchführung von Bergungsarbeiten angewendet werden. Außerdem ist diese Lösung für das Andocken an Hochbauten auf hohem Niveau sowie zur Evakuierung von Leuten aus den oberen Stockwerken eines Gebäudes und zur Landung auf unebenen Landeplätzen, auf Wasser und zum Abflug von diesen Plätzen nicht geeignet.

Es ist Aufgabe der Erfindung, ein Flugzeug zu entwickeln, welches ermöglicht, die erforderlichen Flugleistungen sicherzustellen und dabei folgende Aktivitäten zur Durchführung von Bergungsarbeiten auszuführen:
- ein schnelles Steigen und eine schnelle Beschleunigung,
- eine Möglichkeit, in der Luft steuerbar zu Hängen und an die Objekte in der Höhe anzudocken (gekoppelt zu werden),
- eine Möglichkeit, auf unebenen Landeplätzen und auf Wasser zu landen und von diesen Plätzen zu starten.

Die gestellte Aufgabe wird mit den Merkmalen des Anspruchs 1 gelöst.

Das Notflugzeug ist als eine Konstruktion ausgeführt, die schwerer als Luft ist. Es enthält:
- einen festen Flugkörper, z. B. einen Rumpf,
- Tragflächen (z. B., Flügel),
- ein Leitwerk in Form von einem Stabilisator,
- Motoren und Vortriebsmittel innerhalb eines Toroid-Rotationskörpers, wobei der Toroid-Rotationskörper in ihrem Querschnitt aerodynamisches Profil aufweist und wobei die Motoren und Vortriebsmittel von einer senkrechten Schubkraftrichtung in eine waagerechte Schubkraftrichtung umkehrbar sind, und
- Fahrgestelle, z. B. Einschübe.

Dabei beinhaltet der obere Teil des Flugkörpers Hüllen mit Trägergas. Ihre Auftriebskraft gleicht höchstens die Trockenmasse des Flugzeuges unter Aufbau der erhöhten metazentrischen Größe des Flugzeuges aus. Innerhalb des Flugkörpers und zwar mindestens in seinem unteren Teil ist ein Durchgang mit Austrittsluken und Einrichtungen zum Andocken (Anlegen) an externe Objekte ausgebildet. Der Durchgang ist mit einer ausfahrbaren Treppe mit einem Geländer sowie mit einem Wagen zum Verladen und Ausladen von Leuten und Frachten in der Höhe ausgerüstet.

Die Erfindung wird anhand eines in den Zeichnungen dargestellten Ausführungsbeispiels näher erläutert. Es zeigen:
- Fig. 1: eine Gesamtansicht des Notflugzeuges,
- Fig. 2: das Notflugzeug im Längsschnitt,
- Fig. 3: das Notflugzeug der Fig. 2 im Querschnitt A-A,
- Fig. 4: die Vektoren der wirkenden Kräfte im Längsschnitt,
- Fig. 5: die Vektoren der wirkenden Kräfte im Querschnitt,
- Fig. 6: ein Beispiel zum Andocken des Notflugzeuges an Hochbauten,
- Fig. 7: ein Beispiel für sicheres Landen auf unebenen Plätzen und auf Wasser,
- Fig. 8: ein Beispiel zum Andocken des Notflugzeuges an Abhänge und
- Fig. 9: ein Beispiel für sicheres Landen auf Wasser.

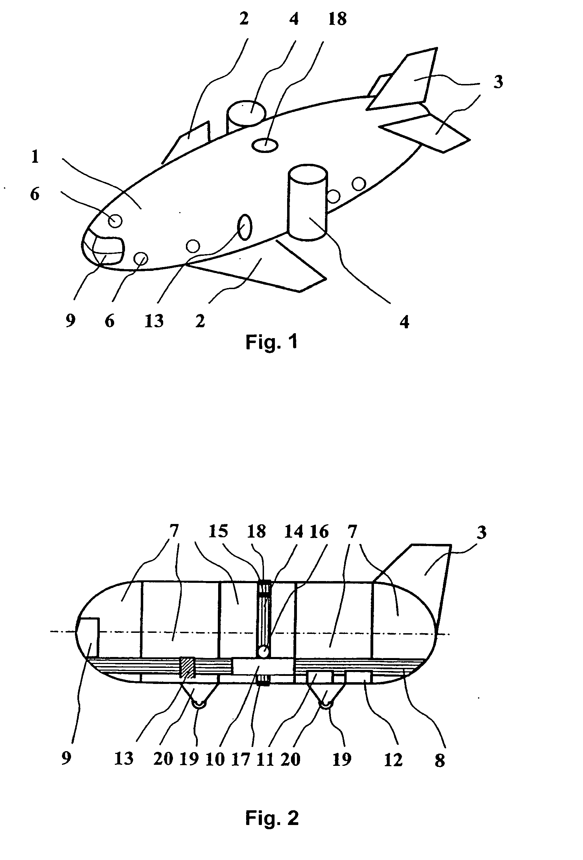

Das Notflugzeug (Fig. 1) besteht aus einem Flugkörper, z. B. einem Rumpf 1, Tragflächen, z. B. Flügeln 2, einem Stabilisator 3 und aerodynamischen Modulen 4.

Die Flügel 2 liegen in der gleichen Ebene mit dem unteren Teil des Rumpfes 1. Die aerodynamische Module 4 enthalten Motoren und Vortriebsmittel (in der Fig. nicht dargestellt).

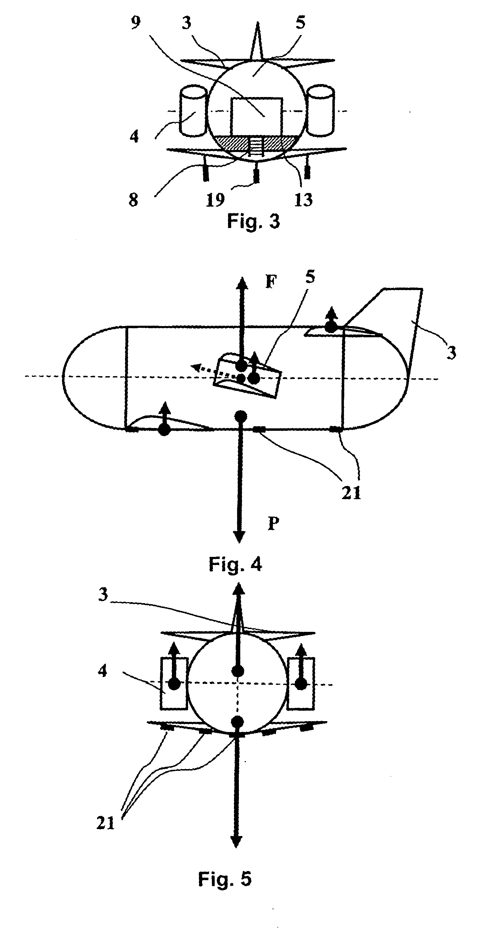

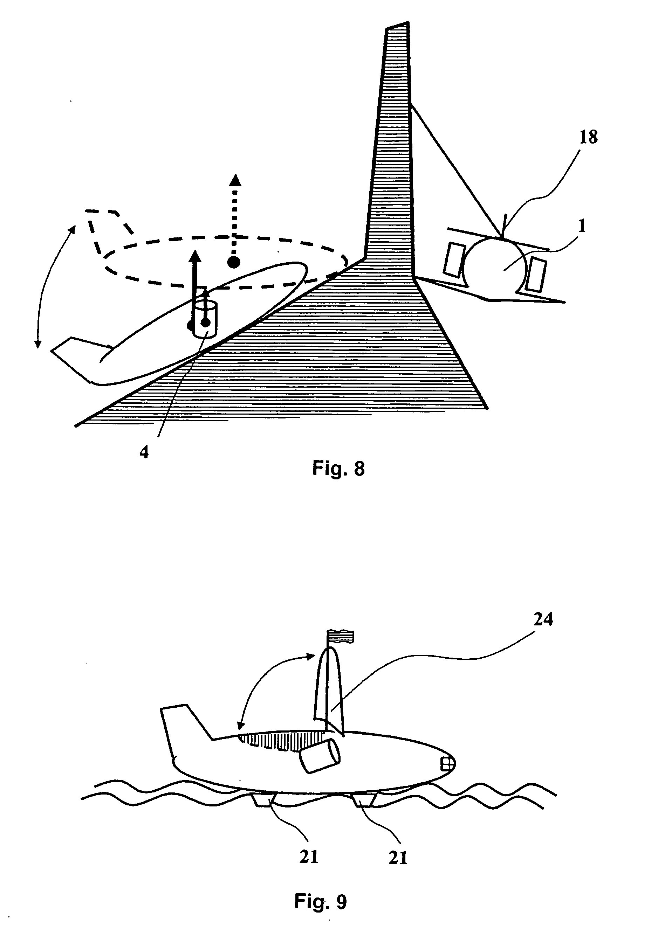

Die aerodynamische Module 4 sind in der Form von Toroid-Rotationskörpern ausgeführt. Der Querschnitt der Toroid-Rotationskörper weist in der Ebene, die durch die Drehachse dieser Toroid-Rotationskörper verläuft, ein aerodynamisches Profil 5 auf. Die aerodynamische Module 4 können von einer senkrechten Schubkraftrichtung in eine waagerechte Schubkraftrichtung umgewendet werden (Fig. 4). Die Einrichtung enthält manövrierfähige Vortriebsmittel 6. Den Hauptumfang des Rumpfs 1 nehmen Hüllen 7 (Fig. 1, 2) ein, die mit Trägergas (Helium) gefüllt sind. Über die gesamte Länge des unteren Teils des Rumpfs 1 ist ein Durchgang 8 (Fig. 2) ausgebildet, der die Funktion eines sog. "Kraftbalkens" hat und als zusätzliche Abstützvorrichtung dient. Die Abstützvorrichtung ist in Form von einem Tragewerk ausgeführt. Der Durchgang 8 verbindet eine Besatzungskabine 9, einen Luftfrachtraum und einen Fluggastraum 10, einen Kraftstoffbehälter 11 und Geräte 12 miteinander. Dabei ist die Besatzungskabine 9 in der Nasenkappe des Rumpfs 1 angeordnet. Der Luftfrachtraum und der Fluggastraum 10 ist im Mittelteil des Rumpfs 1 angeordnet. Der Kraftstoffbehälter 11 und die Geräte 12 sind im Rumpfhinterteil angeordnet. Eine solche Anordnung stellt eine mindestmögliche Tieflage des Schwerpunktes und eine erforderliche Lastigkeit des Flugzeuges bei unterschiedlicher Zuladung (Fig. 4, 5) sicher. Während der Brennstoffausnutzung stellt eine solche Anordnung die Verlagerung des Schwerpunktes zum Rumpfvorderteil sicher, was zur Landung des Flugzeuges beiträgt. Der durchgehende Längsdurchgang 8 durchkreuzt einen Quergang 13 zum Austritt auf die Flächen der Flügel 2 und einen senkrechten Durchgang 14. Der senkrechte Durchgang 14 ist mit einer Winde 15 und mit Einrichtungen zum Absteigen und Einsteigen der Leute und zum Entladen und Beladen mit Frachten 16 (Fig. 2) über eine untere Luke 17 sowie zum Abstieg und Aufstieg des Flugzeuges an einem Drahtseil (bzw. Tauwerk) über eine obere Luke 18 (Fig. 8). Das Flugzeug ist mit Einschüben 19 versehen. Die Einschübe 19 dienen zum Fahren über eine Start- und Landebahn und zur Abfederung beim Landen. Auf den Einschüben 19 sind Flächenelemente 20 angebaut, die zur Stabilisierung sowie zur Steuerung während der Bewegung über die Wasseroberfläche (Fig. 9) dienen. Das Flugzeug ist auch mit flachen elastischen Spike-Landfahrwerken 21 versehen, die im unteren Teil des Rumpfes 1 angeordnet sind und der Verformung der Oberschale des Flugzeuges beim Landen auf unebenem Landeplatz vorbeugen.

Bei den Prototyp-Ausführungen und ähnlichen Erzeugnissen ist die Auftriebskraft der Hüllen mit Trägergas gleich der max. Startmasse des Flugzeuges oder beträgt 90 % und mehr von dieser max. Startmasse. Im Unterschied dazu überschreitet die Auftriebskraft der Hüllen mit Trägergas in der vorgeschlagenen Ausführung nicht die Trockenmasse des Flugzeuges (ohne Besatzung, Kraftstoff, Nutzbelastung) und beträgt ca. die Hälfte der max. Startmasse. Die andere Hälfte der max. Startmasse wird beim Vertikalstart sowie beim Hängen in der Luft durch den Triebwerkschub der Motoren und der Triebwerke in den aerodynamischen Modulen 4 und beim Horizontalflug durch die Auftriebskraft der Flügel 2, des Stabilisators 3 und die Auftriebskraft der aerodynamischen Module 4 mit den Motoren und den Triebwerken (Fig. 4, 5) ausgeglichen.

Die vorgeschlagenen Verhältnisse zwischen der Masse, dem Gewicht und der Schubleistung der Triebwerke des Flugzeuges stellen die erforderlichen und für die Bergungsarbeiten ausreichenden Flugleistungen und Eigenschaften sicher. Erstens ist das Notflugzeug immer schwerer als Luft. Deswegen ist ein Nachpumpen bzw. eine Aufwärmung des Trägergases für seinen Flug nicht erforderlich. Das stellt höchste Startbereitschaft sicher. Zweitens kann das Aufsteigen des Notflugzeuges bis 1500 m und die Beschleunigung bis 300 km/St und mehr innerhalb von 20 - 30 Sekunden erfolgen. Das stellt eine ausreichend hohe Geschwindigkeiten sicher. Drittens wird der spezifische Druck auf die unteren Flächen (Rumpf 1, Flügel 2) infolge des ununterbrochenen Ausgleichs der Trockenmasse des Notflugzeuges durch die Hüllen mit Trägergas ziemlich gering. Das lässt das Notflugzeug bei geringer Nutzbelastung und beim Abschalten der Motoren während des Fluges ziemlich lange in den Aufwinden segeln (schweben). Das ermöglicht eine andauernde Überwachung von Hauptverkehrsadern und Geländen. Bei höchster Nutzbelastung und Abschalten der Motoren im Flug kann das Notflugzeug sehr gleichmäßig niedergehen, so dass die Landung erst nach Dutzenden von Kilometern erfolgt. Das erhöht wesentlich die Flugsicherheit. Viertens befindet sich der Schwerpunkt des Notflugzeuges im unteren Teil des Rumpfs, und der Mittelpunkt der Auftriebskraft liegt höher und zwar in einem Abstand, der ungefähr dem Rumpfradius gleich ist. Das stellt eine konstant wirkende erhöhte metazentrische Größe (Fig. 3) dar. Dank dieser metazentrischen Größe kommt das Notflugzeug praktisch nach jedem beliebigen Abweichen von der waagerechten Stellung in der Luft automatisch in diese waagerechte Stellung zurück. Dadurch wird die Möglichkeit eines senkrechten Trudelns ausgeschlossen und die Flugsicherheit bei einer hohen Turbulenz der Luftströme erreicht.

Der Einsatz von toroidförmigen aerodynamischen Modulen ermöglicht, die Abmessungen des Flugzeugs durch eine geringere Gesamtspannweite der Flügel zu verringern. Es ermöglicht auch, dank dem Einbau der Triebwerke innerhalb der aerodynamischen Module und der Abwesenheit von offenen Flugschrauben, die Sicherheit beim zufälligen bzw. gezwungenen Kontakt des Notflugzeuges im Flug mit anderen Objekten sicherzustellen. Deswegen können sichere Flüge im Gebirge sowie in den Städten zwischen den Hochbauten und elektrischen Leitungen ausgeführt werden.

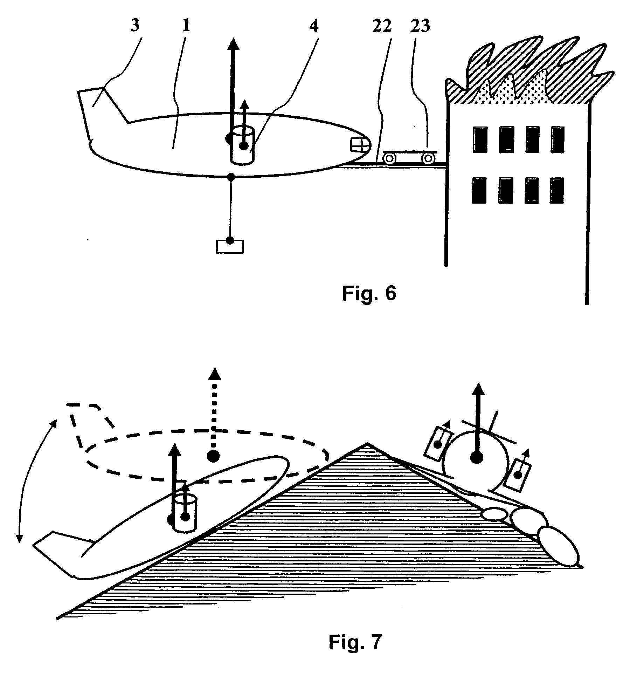

Die Bauweise des Notflugzeuges ist so konzipiert, dass es beim Hubschub der Triebwerke in der Luft hängen sowie an senkrecht angeordneten Objekten andocken kann. Um die Rettung der Leute in oberen Etagen von Hochbauten sicherzustellen, kann die Besatzung die Nase des Notflugzeuges langsam an eine Fensteröffnung (in der Fig. nicht dargestellt) nähern, die vordere Luke (in der Fig. nicht dargestellt) öffnen, mittels der ausfahrbaren Treppe (Fig. 2, A) den Fensterrahmen (in der Fig. nicht dargestellt) einschlagen und das Flugzeug an der Fensteröffnung anzudocken. Um die Genauigkeit der Bewegungen und das Treffen der Treppe in der Fensteröffnung sicherzustellen, ist das Notflugzeug mit mindestens einem Manövriertriebwerk 6 ausgerüstet. Das Manövriertriebwerk 6 wird z. B. im vorderen Teil des Flugkörpers angeordnet. Nach dem Andocken an der Wand können sowohl die Rettungsmannschaft als auch die geretteten Personen über eine ausfahrbare Treppe 22, z. B. mit Geländer, aus dem Notflugzeug ins Gebäude und zurück übergehen. Für die Rettung von verletzten Personen sowie für den Transport von Frachten ist ein abnehmbarer Wagen 23 (Fig. 6) vorgesehen. Der Wagen 23 ist mit einem Freiheitsgrad versehen, um die Beförderung entlang der ausfahrbaren Treppe 22 und des Durchgangs 8 ausführen zu können.

Soll das Notflugzeuggewicht nach der Rettung der Leute und Ladegüter aus dem Gebäude die max. Startmasse nicht überschreiten, so löst die Rettungsmannschaft die ausfahrbare Treppe 22 an der Fensteröffnung los, räumt sie auf, führt das Notflugzeug von der Wand ab, macht die Luke zu und transportiert die geretteten Leute per Luft zur jeweiligen Heilanstalt. Liegt bei der Rettung von Leuten und Ladegütern aus dem Gebäude die Möglichkeit der Überschreitung der max. Startmasse vor, so können die an Bord genommenen Leute und Ladegüter auf der Erde oder einer anderen sicheren Stelle über den senkrechten Durchgang 14 abgesetzt werden. Der Durchgang 14 ist dabei mit einer Winde 15 und mit Einrichtungen 16 zum Absteigen und Einsteigen der Leute und zum Entladen und Beladen mit Frachten (Fig. 2) versehen.

Über die obere Luke 18 im senkrechten Durchgang 14 kann das Notflugzeug mittels eines Drahtseils an höher angeordneten Stützpunkten angehängt werden. Diese Möglichkeit kann zum andauernden Halten des Notflugzeuges an senkrechten Wänden oder an großen Steilhängen oder zum Niedergehen und Aufsteigen des Notflugzeuges in engen Klüften bzw. unter Gebäuden und Bauten (Fig. 8.) eingesetzt werden.

Der ständige Ausgleich der Trockenmasse sowie die Wirkung der erhöhten metazentrischen Größe ermöglicht dem Notflugzeug, wenn es sich auf einem geneigten Platz befindet, sich vom Platz nach dem Einschalten der Hubschubleistung der Triebwerke teilweise abzuheben, eine waagerechte Stellung einzunehmen und dann aufzusteigen. Es wird auch ermöglicht, in der waagerechten Stellung die schrägen Plätze zu berühren und bei gleichmäßiger Herabsetzung des Hubschubes der Triebwerke auf den geneigten Plätzen zu landen (Fig. 3). Die Konstruktionsmerkmale ermöglichen es dem Notflugzeug, mit dem Rumpf 1 und den Flügeln 2 wie mit einer zusätzlichen Abstützvorrichtung, auf Sümpfe, Steinfelder, Pulverschnee, dünnes Eis, dichtes Dickicht usw. zu landen und dann von da aus zu starten. Das macht das Landen praktisch an beliebiger Stelle oder in unmittelbarer Nähe dazu möglich (Fig.7). Die Konstruktion des Notflugzeuges ermöglicht das Landen auf Wasser und das Halten auf der Wasseroberfläche innerhalb einer unbestimmt längeren Zeit, da der Rumpfumfang (der Umfang der Hüllen mit Trägergas) mehrere hundertmal größer als der Umfang der verdrängten Wassermasse ist. Die Querstabilität auf dem Wasser wird durch die abgedichteten Hohlflügel sichergestellt. Sie üben die Funktion von seitlichen Stabilisierungsschwimmern aus. Die Schwimmfähigkeit und die zusätzliche Konstruktionsfestigkeit des Notflugzeuges werden dadurch sichergestellt, dass der untere Teil des Rumpfs und die Flügel mit Räumen versehen sind, die mit einem festen Schwimmermaterial (Kunstschaumstoff) ausfüllbar sind.

Wird das Flugzeug mit Einrichtungen zur Wasserentnahme und zum Wasserablassen ausgerüstet, so kann es auch zur Brandbekämpfung eingesetzt werden. Dabei wird das höchstmögliche Verhältnis der Masse von aufgenommenem Wasser zur Schubleistung der Triebwerke verwendet.

In der Schwimmstellung kann das Notflugzeug Leute und Ladegüter von hoch angeordneten Objekten (steile Küsten, Hochdecken usw.) über die obere Luke und unmittelbar aus dem Wasser über die Luken im vorderen und im hinteren Teil aufnehmen. Es ist auch leicht möglich, Leute und Ladegüter aus dem Wasser auf die Flügel 2 heraufzuschleppen und dann in die seitlichen Luken der Querdurchgänge zu befördern. Das erhöht wesentlich die Möglichkeiten und Sicherheiten bei Rettungsaktionen. Wird das Notflugzeuggewicht auf dem Wasser nach dem Einsteigen der Leute und der Aufnahme von Ladegüter höher, als die max. zulässige Startmasse, so kann das Notflugzeug sich über dem Wasser wie ein Fahrzeug mit Luftkissen bzw. auf der Wasseroberfläche wie ein Wassergleiter bewegen. Die gesteuerte Bewegung des Notflugzeuges über das Wasser bei abgeschalteten Motoren (bei Ausfall, bzw. bei nicht vorhandenem Kraftstoff oder beim Kraftstoffsparbetrieb) wird durch einen gelenkig befestigen Klappmast mit einem festen krummlinigen Segel 24 sichergestellt. Im abgesunkenen Zustand ist das Segel 24 Bestandteil des oberen Rumpfteils 1. Die Funktion von zwei Kielen und der Ruder wird durch Flächen ausgeführt, die die Steifigkeitselemente der ausfahrbaren Einschübe 19 sind.

Liste der Positionen mit Bezugsziffern

| | | |
|---|---|---|
| Rumpf | Fuselage | 1 |
| Flügel | Wings | 2 |
| Stabilisator | Fin | 3 |
| Aerodynamische Module | Aerodynamic modules | 4 |
| Aerodynamisches Profil | Aerodynamic profile | 5 |
| Manövriertriebwerk | Maneuvering propulsion device | 6 |
| Hüllen | Envelopes | 7 |
| Durchgang | Pass through | 8 |
| Besatzungskabine | Crew cabin | 9 |
| Fluggäste- und Frachtraum | Compartment for cargo and passengers | 10 |
| Kraftstoffbehälter | Fuel tanks | 11 |
| Geräte | Units | 12 |
| Querdurchgang | Cross pass | 13 |
| Senkrechter Durchgang | Vertical pass | 14 |
| Winde | Winch | 15 |
| Einrichtung zum Absteigen und Einsteigen der Leute und zum Entladen und Beladen mit Frachten | Device for descent-lifting of people and cargoes | 16 |
| Untere Luke | Bottom hatchway | 17 |
| Obere Luke | Top hatchway | 18 |
| Einschübe | Retractable chassis | 19 |
| Flächenelemente | Plane elements | 20 |
| Flache elastische genormte Spike-Landfahrwerke | Plane elastic typical supports | 21 |
| Ausfahrbare Treppe | Boarding bridge | 22 |
| Abnehmbarer Wagen | Removable bogie | 23 |
| Krummliniges Segel | Curvilinear sail | 24 |

## Patentansprüche

1. Notflugzeug mit einem Rumpf (1), im Rumpf (1) angeordneten Hüllen (7) mit Trägergas, Tragflächen, einem Leitwerk, einer Motorenanlage, Vortriebsmitteln (6), einem Fahrgestell und einer Kabine (9) im Rumpf (1)
**dadurch gekennzeichnet,**
**dass** die Vortriebsmittel (6) innerhalb eines Toroid-Rotationskörper angeordnet sind, die in ihrem Längsschnitt ein aerodynamisches Profil (5) aufweisen und die von einer senkrechten Schubkraftrichtung in eine waagerechte Schubkraftrichtung umkehrbar sind, und
**dass** im Flugkörper und zwar mindestens in seinem unteren Teil ein Durchgang (8) mit Austrittsluken (17, 18) und Einrichtungen (16) zum Andocken an externe Objekte ausgebildet ist.

2. Notflugzeug nach Anspruch 1,
**dadurch gekennzeichnet,**
**dass** eine zusätzliche Abstützvorrichtung in Form eines Tragewerk des Durchgangs (8), welches einen sog. "Kraftbalken" bildet, und von unteren Oberflächen des Rumpfs (1) und den Tragflächen mit abgeschlossenen Räumen ausgeführt ist, wobei die Räume mit einem festen Schwimmermaterial gefüllt sind und die Schwimmfähigkeit des Flugzeuges und seine Stabilität auf dem Wasser und an Land sicherstellen.

3. Notflugzeug nach Anspruch 1,
**dadurch gekennzeichnet,**
**dass** der Längsdurchgang (8) mit mindestens einer ausfahrbaren Treppe (22) und einem abnehmbaren Wagen (23) ausgerüstet ist, der nur mit einem Freiheitsgrad versehen und entlang der Treppe (22) und des Durchgangs (8) verfahrbar ist.

4. Notflugzeug nach Anspruch 1,
**dadurch gekennzeichnet,**
**dass** ein senkrechter Durchgang (14) mit einer Winde (15), einem Antrieb und Einrichtungen (16) zum Absteigen und Einsteigen der Leute und zum Entladen und Beladen mit Frachten über die untere Luke (17) sowie zum Abstieg und Aufstieg des Flugzeuges über die obere Luke (18) ausgerüstet ist.

5. Notflugzeug nach Anspruch 1,
**dadurch gekennzeichnet,**
**dass** das Notflugzeug mit mindestens einem Manövriertriebwerk (6) für genaue Bewegungen während der Flüge in einem begrenzten Raum, beim Andocken an Objekte auf der Höhe sowie bei Ausführung von Montagearbeiten ausgerüstet ist.

6. Notflugzeug nach Anspruch 1, 2,
**dadurch gekennzeichnet,**
**dass** es mit einem festen krummlinigen Segel (24) ausgerüstet ist, um steuerbare Bewegungen auf dem Wasser bei Rücken- und Seitenwind ausführen zu können,
**dass** das Segel (24) im zusammengelegten Zustand als ein Oberflächenelement des oberen Teils des Flugkörpers dient,
**dass** das Notflugzeug darüber hinaus mit zwei Kielen und einem Ruder ausgerüstet ist, die Bestandteile von ausfahrbaren Einschüben (19) bilden.
